# EUROPÄISCHE PATENTSCHRIFT

(11) **EP 0 928 133 B1**
(45) Veröffentlichungstag und Bekanntmachung des Hinweises auf die Patenterteilung: **05.03.2003**
(21) Anmeldenummer: 97940004.1
(22) Anmeldetag: 17.07.1997
(51) Int. Cl.: A01C 7/20, A01C 5/06

(54) **WERKZEUGTRÄGER**
TOOL HOLDER
PORTE-OUTIL

(30) Priorität: 01.08.1996 US 691105
(43) Veröffentlichungstag der Anmeldung: 14.07.1999
(73) Patentinhaber: DEERE & COMPANY, Moline, Illinois 61265-8098 (US)
(72) Erfinder: WODRICH, Timothy, Dirk, Rock Island, IL 61201 (US); STANFILL, Ralph, Everette, Geneseo, IL 61254 (US)
(74) Vertreter: Magin, Ludwig Bernhard
(86) Internationale Anmeldenummer: EP9703838
(87) Internationale Veröffentlichungsnummer: WO98005193

(56) Entgegenhaltungen:
- EP-A- 0 140 190
- WO-A-96/29852
- FR-A- 1 494 403
- US-A- 4 077 478
- US-A- 4 846 084

## Beschreibung

Die Erfindung betrifft einen Werkzeugträger mit einem Hauptrahmen und wenigstens einem Werkzeug, das mittels einer Strebe vertikal schwenkbar an dem Hauptrahmen angebracht ist, wobei zwischen der Strebe und dem Hauptrahmen eine Feder, die das Werkzeug in eine Richtung drängt und einenends mittelbar oder unmittelbar an dem Hauptrahmen anliegt, und ein in der Länge veränderbarer Wegbegrenzer vorgesehen sind.

Die US-A-5,092,255 offenbart eine Sämaschine mit Furchenöffnern, die vertikal schwenkbar und in einer Richtung gegen den Widerstand einer Feder an einem Hauptrahmen angelenkt sind. Hierzu ist ein Träger mit einem Arm vorgesehen, zwischen dem und dem Hauptrahmen sich ein Wegbegrenzer und die diesen umgebende Feder erstrecken. Während der Wegbegrenzer an der Unterseite des Arms anliegt und somit dessen Abwärtsbewegung begrenzt, liegt die Feder auf dessen Oberseite an und bildet einen Widerstand, wenn der Träger nach oben schwenkt. Der Wegbegrenzer ist zwar in seiner Länge einstellbar, so daß die Abwärtsbewegung des Furchenöffners begrenzt werden kann; hingegen liegt die Feder stets an dem Arm an und beaufschlagt den Furchenöffner zusätzlich zu seinem Gewicht.

Das der Erfindung zugrunde liegende Problem wird darin gesehen, daß das Werkzeug bei einem Einsatz auf lockerem Boden zu stark in den Boden eindringt.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise können zwei Arbeitsbereiche eingestellt werden, von denen in einem ersten Arbeitsbereich nur das Gewicht des Werkzeugs wirkt, während die Feder zwischen dem Anschlag und Federhalter auf dem Wegbegrenzer wirkungslos gehalten wird. In dem zweiten Arbeitsbereich wirkt neben dem Gewicht des Werkzeugs auch die Kraft der vorzugsweise vorgespannten Feder.

Ein axial auf dem Wegbegrenzer beweglich gelagerter Anschlag läßt es zu, daß dieser, bzw. ein zu ihm gehörender Zuganker, sich auch dann noch bewegen können, wenn der Anschlag z. B. auf einem ihn führenden oder tragenden Arm aufsitzt.

Eine Anlage des Anschlags an einem Anschlag des Wegbegrenzers, d. h. eine Fixierung dessen axialer Lage in einer Richtung sorgt dafür, daß der Anschlag stets die gleiche Einstellung auf dem Wegbegrenzer einhält. Zum anderen kann durch eine Längenänderung des Wegbegrenzers unmittelbar die Vorspannung der Feder und der Schwimmbereich des Werkzeugs ohne Federbeaufschlagung variiert werden.

Die Vereinigung einer guten Führungsfunktion mit einer sicheren Aufnahme eines Federendes kann mit einem Teil erreicht werden, bei dem der Anschlag aus einer sich durch eine Bohrung in der Strebe bzw. deren Arm erstreckenden Hülse und einem tellerförmigen Anschlag von wesentlich größerem Durchmesser besteht, auf dem die Feder aufsitzt.

Eine einfache Möglichkeit, die Vorspannung der Feder sowie die Spannweite beider Arbeitsbereiche zu verändern, wird darin gesehen, daß der Wegbegrenzer aus zwei Teilen besteht, die miteinander in verschiedenen Stellungen verschraubt werden. Hierfür eignet sich hervorragend eine Gewindestange und ein Zuganker mit einer Axialgewindebohrung.

Mittels eines auf dem Zuganker aufsitzenden oder mit diesem verbundenen tellerförmigen Federhalters, der also eine beträchtliche radiale Erstreckung aufweist, kann ein Ende der Feder sicher und zuverlässig aufgenommen werden.

Der Andrückdruck des Werkzeugs kann unabhängig von der Einstellung der Feder und des Schwimmbereichs dadurch variiert werden, daß die Werkzeuge von einer Kippwelle getragen werden, die auf dem Hauptrahmen verstellbar gelagert ist und somit z. B. generell den Schwimmbereich ausschaltet und gegebenenfalls ein oder mehrere Werkzeuge mit Federdruck auf den Boden oder eine andere Fläche aufdrückt. Hierzu wird insbesondere eine fernsteuerbare hydraulisch wirkende Andrücksteuerungsvorrichtung vorgeschlagen.

Mittels einer Vorspannung der Feder, die wenigstens 30 % größer ist als die sich aus dem Gewicht des Werkzeugs ergebende Kraft, kann ein eindeutiger Kräfteunterschied in der Beaufschlagung des Werkzeugs hervorgerufen werden, der dieses Werkzeug zur Anwendung unter vollkommen unterschiedlichen Bedingungen geeignet macht.

Wenn auch ein Werkzeug, insbesondere ein Bodenbearbeitungswerkzeug generell wechselnden Bedingungen ausgesetzt ist, so ist die Anwendung des erfindungsgemäßen Werkzeugträgers für die Aufnahme von als Furchenöffnern ausgebildeten Werkzeugen einer Sämaschine besonders wirkungsvoll, weil die Saatbettvorbereitung für das Aufgehen der Saat sehr wichtig ist.

In der Zeichnung ist ein nachfolgend näher beschriebenes Ausführungsbeispiel des Standes der Technik und der Erfindung dargestellt. Es zeigt:
- Fig. 1: einen bekannten mit als Furchenöffner ausgebildeten Werkzeugen, einer hydraulischen Andrücksteuerung und einer Feder versehenen Werkzeugträger in Seitenansicht,
- Fig. 2: eine erfinderische Verbesserung bezüglich der Feder, wobei das Werkzeug in einem ersten Arbeitsbereich mit einer relativ geringen Andrückkraft gezeigt ist,
- Fig. 3: eine Darstellung ähnlich wie Figur 2, wobei allerdings der Bereich der Feder teilweise im Schnitt gezeigt ist, und
- Fig. 4: eine Darstellung ähnlich wie Figur 2, wobei allerdings das Werkzeug an einem unteren Ende eines zweiten Bereichs von Stellungen gezeigt ist, in dem die Feder beginnt, einen Anpreßdruck auf das Werkzeug auszuüben.

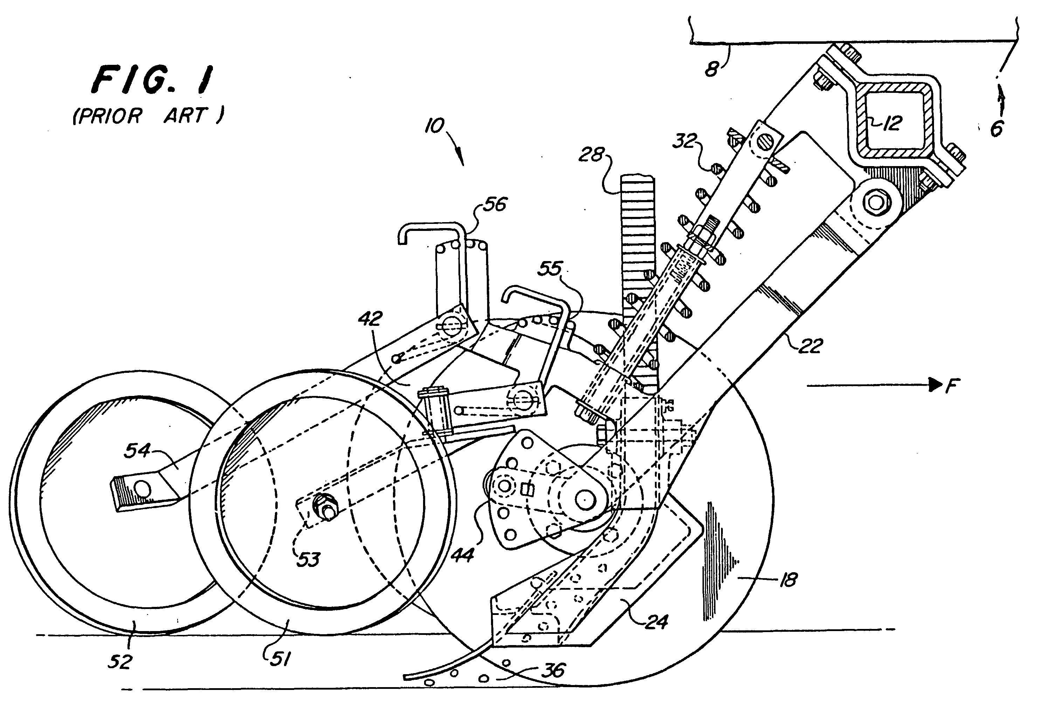

In Figur 1 ist ein Bereich eines Werkzeugträgers 6 mit einem Hauptrahmen 8 gezeigt, der so ausgebildet ist, daß er in der Vorwärtsfahrtrichtung (F) mittels eines nicht gezeigten Ackerschleppers über eine Bodenoberfläche gezogen werden kann. Dieser Werkzeugträger kann als ein Sägerät ausgebildet sein bzw. zu einem solchen komplettiert werden und enthält eine Vielzahl herkömmlicher als Furchenöffner ausgebildeter Werkzeuge 10, die von einer Kippachse 12 auf dem Hauptrahmen 8 getragen werden. Die weitere Beschreibung geht der Einfachheit wegen von einem einzigen Werkzeug 10 aus, was jedoch nicht einschränkend zu verstehen ist. Anstelle des Sägeräts könnte auch ein Pflanzgerät oder eine reine Bodenbearbeitungsmaschine, z. B. ein Grubber die Grundlage für die Anwendung der Erfindung sein. Jedes Werkzeug 10 entspricht im wesentlichen der Bauart, wie sie in der US-A-4,760,806 und der US-A-5,092,255 gezeigt ist, und enthält eine abgewinkelte Scheibe 18, die von einer Strebe 22 um eine Achse drehbar gehalten wird, die unter einem Winkel zu der Querrichtung verläuft. Ein Säschar 24 wird nahe der Scheibe 18 gehalten und mittels eines flexiblen Saatgutrohrs 28 an eine Vorrichtung zur Abgabe dosierten Saatguts auf der Sämaschine angeschlossen. Ein Andrückfederzusammenbau 32, der an eine einstellbare hydraulische Andrucksteuerungsvorrichtung 34 angeschlossen ist, drückt das Werkzeug 10 steuerbar in den Boden, um eine Furche 36 zu öffnen. Zusätzlich zu den Funktionen des Anhebens und Absenkens des bzw. der Werkzeuges) 10 erbringt die Andrücksteuerungsvorrichtung 34 auf der Kippwelle 12 eine im wesentlichen konstante durchschnittliche Andrückkraft für das Werkzeug 10 und ist vorzugsweise so ausgebildet, wie es in der US-A-5,065,681 beschrieben ist.

Ein Tiefeneinstellrad 42 ist nahe der voreilenden Seite der Scheibe 18 um eine Achse drehbar gelagert, die zu der Achse der Scheibe 18 versetzt ist. Die Einstellung der Furchentiefe erfolgt über eine Einstellvorrichtung 44, die die Achse des Tiefeneinstellrades 42 in bezug auf die Scheibe 18 vertikal verstellt. Andrückräder 51 und Schließräder 52 sind jeweils rückwärtig und angrenzend an die Scheibe 18 von Armen 53 und 54 getragen und können mittels Andrückfederzusammenbauten 55 und 56 eingestellt werden.

Es folgt nun die Beschreibung des bevorzugten Ausführungsbeispiels der Erfindung.

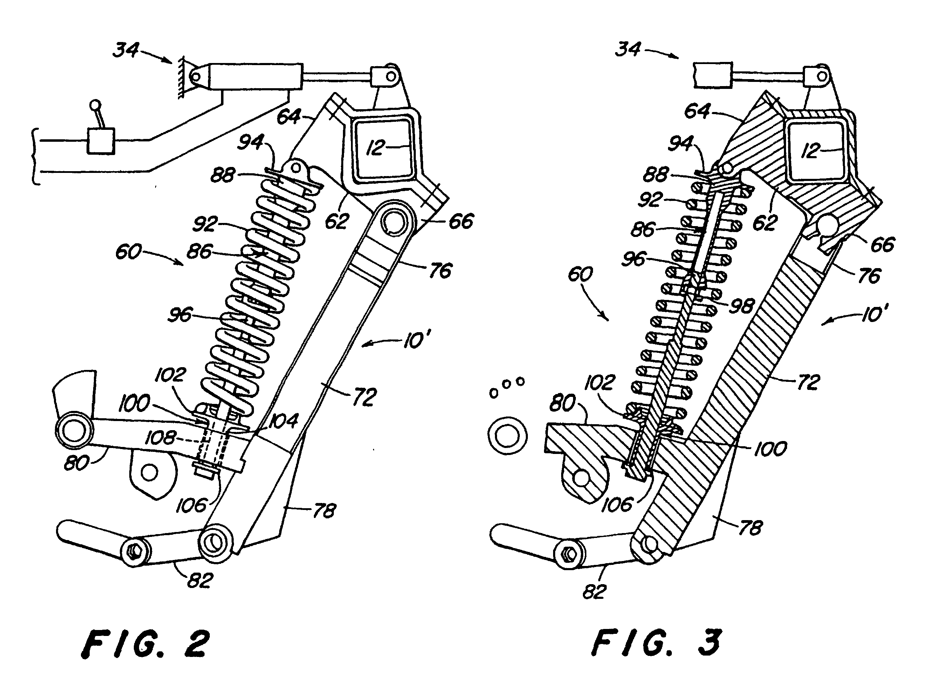

Danach ist in den Figuren 2 bis 4 ein Werkzeug 10 mit einer verbesserten Andrückfedervorrichtung 60 gezeigt, die ein zweistufiges Andrückvermögen aufweist, um einen besseren Betrieb unter sich wechselnden Bodenbedingungen zu erbringen. In einer ersten Stufe bzw. einem ersten Arbeitsbereich ist die Andrückkraft, d. h. die nach unten gerichtete Kraft, unabhängig von einer Feder 92, des Andrückfederzusammenbaus 32, während in einer zweiten Stufe ein herkömmlicher federunterstützter einstellbarer Andrückdruck aufgebracht wird.

Das Werkzeug 10' enthält einen Halter 62, der an die Kippwelle 12 angeschlossen ist und einen oberen und einen unteren rückwärts gerichteten Tragabschnitt 64 und 66 besitzt. Die Kippwelle 12 ist mit dem Halter 62 mittels der hydraulischen Andrücksteuerungsvorrichtung 34 um eine querverlaufende Schwenkachse kippbar. Eine Strebe 72 in der Art eines Armes enthält einen oberen vorderen Abschnitt 76, der schwenkbar an den Halter 66 angeschlossen ist. Die Strebe 72 erstreckt sich nach unten und nach hinten zu einem unteren Abschnitt 78 zum Tragen herkömmlicher Bodenbearbeitungswerkzeuge, wie sie in dem Werkzeug 10 in Figur 1 gezeigt sind. Der Abschnitt 78 enthält einen Arm 80, der sich von der Strebe 72 nach hinten erstreckt, und einen unteren Träger 82, der sich von dem unteren Ende der Strebe 72 aus nach hinten erstreckt. Das rückwärtige Ende des Arms 80 trägt nicht gezeigte Andrück- und Schließräder, die den Andrück- und Schließrädern 51 und 52 aus Figur 1 entsprechen. Eine angewinkelte Scheibe, d. h. eine Scheibe, die unter einem bestimmten Winkel angestellt ist, Tiefeneinstellräder und Einstellvorrichtungen, die jeweils nicht dargestellt sind, entsprechen denen, die mit den Bezugszeichen 18, 42 und 44 in Figur 1 bezeichnet sind, und sind an den unteren Endabschnitt der Strebe 72 und an den Träger 82 angeschlossen.

Die Andrückfedervorrichtung 60 enthält einen Wegbegrenzer 86 mit einem aufrechten als Zuganker ausgebildeten Zuganker 88, der an seinem oberen Ende schwenkbar an den Tragabschnitt 64 angeschlossen ist. Die als Schraubendruckfeder ausgebildete Feder 92 umgibt den Zuganker 88 und schlägt an einem oberen Federhalter 94 an. Der Zuganker 88 enthält eine sich axial erstreckende Bohrung und einen ganz unten liegenden in Figur 3 ersichtlichen Mutterhalteabschnitt, der drehfest eine Mutter 98 aufnimmt. Ein mit Gewinde versehener Endbereich einer Gewindestange 96 wird von der Mutter 98 in dem Mutterhalteabschnitt aufgenommen und erstreckt sich nach oben in die Bohrung des Zugankers 88.

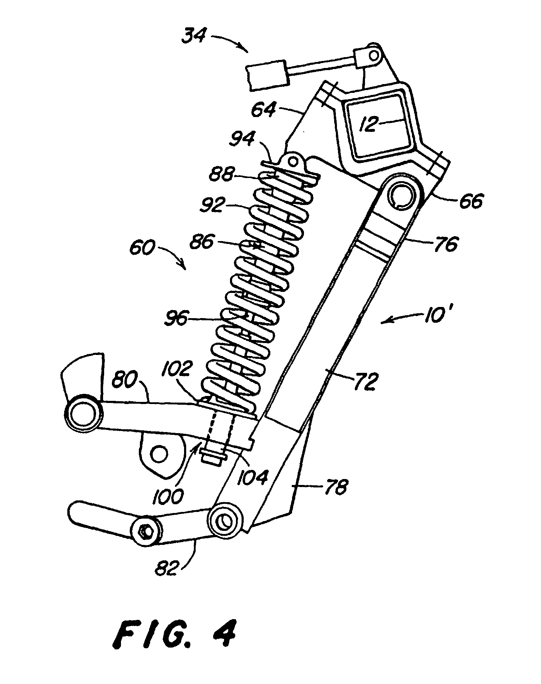

Eine Hülse 100 enthält einen vergrößerten und der Anlage der Feder 92 dienenden Anschlag 102, und eine zylindrische Hülse 104 ist auf dem unteren und mit einem Schraubenkopf versehenen Ende der Gewindestange 96 unmittelbar oberhalb eines Anschlags 106 beweglich gelagert, die von einer größeren Scheibe gebildet wird. Die Hülse 104 ist gleitend in einer Bohrung 108 aufgenommen, die sich in einer Aufnahmezone des Arms 80 befindet. Die Länge der Hülse 104 ist wesentlich größer als die Dicke des Arms 80 in diesem Bereich, so daß die Hülse 100 zwischen einer unteren Stellung - sh. Figur 4 - und einer nicht gezeigten oberen Stellung frei vertikal in bezug auf den Arm 80 gleiten kann. In der unteren Stellung sitzt der Anschlag 102 auf der Oberseite des Arms 80 auf und in der oberen Stellung berührt die ebenfalls als Anschlag 106 dienende Scheibe den Boden, d.h. die Unterseite des Arms 80.

Der Anschlag 102 erstreckt sich in den unteren Endbereich der Feder 92 und hält das Ende der Hülse 104. Die Gewindestange 96 ist in die Mutter 98 eingeschraubt, um eine vorbestimmte Federvorspannung aufzubauen. Die Strebe 72 kann frei und unabhängig von jeglicher Spannung durch die Feder 92 schwenken, bis sie eine Schwenkstellung erreicht, in der die Unterseite des Anschlags 102 an der Oberseite des Arms 80 anschlägt - sh. Figur 4. Danach bewirkt jede weitere Schwenkbewegung der Strebe 72 nach oben, daß die Feder 92 zwischen dem als Endteil wirkenden Anschlag 102 und dem oberen Federhalter 94 über die vorgewählte Federspannung hinaus zusammengedrückt wird. Das untere Ende der Gewindestange 96 gleitet durch die Hülse 104 nach unten, wenn die Feder 92 infolge der aufwärts gerichteten Schwenkbewegung der Strebe 72 um den Tragabschnitt 66, bzw. die von ihm definierte Schwenkachse zusammengedrückt wird. Wenn die Kippwelle 12 im Uhrzeigerdrehsinn geschwenkt wird, um das bzw. die Werkzeuge 10' vom Boden anzuheben, berührt der Anschlag 106 die Unterseite des Arms 80, und der Wegbegrenzer 86 schwenkt die Strebe 72 nach oben in eine Transportstellung, in der alle Bodenbearbeitungswerkzeuge, die an den Arm 80 angebracht sind, in einen beträchtlichen Abstand über den Boden gebracht werden.

In einem Betrieb, bei dem unterstellt wird, daß eine Bedienungsperson mit einem Sävorgang auf einem Feld mit lockerem Boden beginnt, wird die Kippwelle 12 entgegen dem Uhrzeigerdrehsinn geschwenkt, indem die Andrücksteuerungsvorrichtung 34 auf einen Minimalwert eingestellt wird, so daß der dazugehörige Hydraulikzylinder ausfährt, bis das Werkzeug 10' gerade den Boden berührt und die Hülse 100 die in den Figuren 2 und 3 gezeigte Stellung durchfährt, um sich auf den Arm 80 aufzusetzen. Bei der minimalen Andrückdruckeinstellung der Andrücksteuerungsvorrichtung 34 ist die nach unten gerichtete Kraft des Werkzeugs 10' im wesentlichen auf dessen Gewicht begrenzt. Die Strebe 72 kann frei auf- und abschwenken, um den Bodenunebenheiten zu folgen, und zwar unabhängig von irgendeiner Vorspannung durch die Feder 92 solange, bis der Arm 80 entweder auf dem Anschlag 106 aufsitzt, oder den Anschlag 102 der Hülse 100 berührt und die anfängt, die Feder 92 zusammenzudrücken. Wenn aus irgendeinem Grund eines der Werkzeuge 10' auf ein Hindernis auftrifft, kann die Strebe 72 nach oben bis über den nicht vorgespannten Schwenkbereich hinaus ausweichen, da der Anschlag 102, der dann den Arm 80 berührt, die Feder 92 zusammendrückt. Allerdings wird die Andrücksteuerungsvorrichtung 34 die Kippwelle 12 in der Stellung halten, in der der durchschnittliche Arbeitsdruck des Werkzeugs 10' so hoch ist, daß eine ungehinderte Schwenkbewegung wenigstens der meisten der Werkzeuge 10' auf der Kippwelle 12 erhalten bleibt. Wenn das Werkzeug 10' in einer Radspur arbeitet, oder sich nach unten in eine Eindrückung des Bodens bewegen muß, trägt die Hülse 100 dazu bei, daß sich das Werkzeug 10' nicht aus dem Boden hebt. Wenn die Bedienungsperson einen festeren Boden vorfindet, wie dies z. B. bei geringer oder gar keiner Bodenbearbeitung typisch ist, stellt sie die Andrücksteuerungsvorrichtung 34 so ein, daß sie die Kippwelle 12 entgegen dem Uhrzeigerdrehsinn aus einer freien Schwenkstellung der Werkzeuge 10' in eine Stellung bringt, in der der Anschlag 102 auf dem Arm 80 aufsitzt und die Feder 92 beginnt, sich zusammenzudrücken. Danach arbeitet das Werkzeug 10' in der bekannten Weise mit Federvorspannung, in der die auf das Werkzeug 10' wirkende Kraft der Summe von deren Gewicht und der von den Federn 92 aufgebrachten Kraft ist, Von der Andrücksteuerungsvorrichtung 34 wird ein durchschnittlicher Andrückdruck aufrechterhalten. Vorzugsweise ist die vertikale Vorspannung, die in dem herkömmlichen Federvorspannungsbetrieb aufgebaut wird, wenigstens 30% größer als die Vorspannung, die entsteht, wenn sich der Arm 80 in dem ungehinderten Schwimmzustand befindet.

## Patentansprüche

1. Werkzeugträger mit einem Hauptrahmen (8) und wenigstens einem Werkzeug (10'), das mittels einer Strebe (72) vertikal schwenkbar an dem Hauptrahmen (8) angebracht ist, wobei zwischen der Strebe (72) und dem Hauptrahmen (8) eine Feder (92), die das Werkzeug (10') in eine Richtung drängt und einenends mittelbar oder unmittelbar an dem Hauptrahmen (8) anliegt, und ein in der Länge veränderbarer Wegbegrenzer (86) vorgesehen sind, der einen ersten Anschlag (106) aufweist, der an der Strebe (72) zum Anliegen kommen kann, **dadurch gekennzeichnet, daß** der Wegbegrenzer (86) einen gegenüber dem Wegbegrenzer (86) beweglich gelagerten, zweiten Anschlag (102) aufweist, an dem die Feder (92) anderenends zur Anlage bringbar ist und der an der Strebe (72) zum Anliegen kommen kann und daß der Wegbegrenzer (86) innerhalb eines durch den ersten Anschlag (106) und den zweiten Anschlag (102) begrenzten Bereichs gegenüber der Strebe (72) ohne zusätzliche Belastung durch die Feder (92) beweglich ist.

2. Werkzeugträger nach Anspruch 1, **dadurch gekennzeichnet, daß** der Anschlag (102) auf dem Wegbegrenzer (86) axial beweglich gelagert ist.

3. Werkzeugträger nach Anspruch 1, **dadurch gekennzeichnet, daß** die Bewegung des Anschlags (102) von einem Anschlag (106), der einenends auf dem Wegbegrenzer (86) vorgesehen ist, begrenzt wird, wobei der Anschlag (106) das Gewicht des Werkzeugs (10') aufnimmt, während auf dem Anschlag (102) die Feder (92) aufsitzt und ab einem vorbestimmten Weg des Werkzeuges (10') auf der dem Anschlag (106) gegenüberliegenden Seite des Werkzeugs (10') anliegt.

4. Werkzeugträger nach Anspruch 1, **dadurch gekennzeichnet, daß** der Anschlag (102) mit einer sich durch eine Bohrung in der Strebe (22) erstreckenden Hülse (104) verbunden ist, tellerförmig mit einem wesentlich größerem Durchmesser als die Hülse (104) ausgebildet ist und die Feder (92) aufnimmt.

5. Werkzeugträger nach Anspruch 1, **dadurch gekennzeichnet, daß** der Wegbegrenzer (86) eine Gewindestange (96) und einen diese aufnehmenden Zuganker (88) aufweist, die ineinander schraubbar sind.

6. Werkzeugträger nach Anspruch 1, **dadurch gekennzeichnet, daß** der Zuganker (88) einen tellerförmigen Federhalter (94) aufweist.

7. Werkzeugträger nach Anspruch 1, **dadurch gekennzeichnet, daß** das Werkzeug (10') insbesondere mittels einer Andrücksteuerungsvorrichtung (34) in verschiedene Stellungen gegenüber dem Hauptrahmen (8) bringbar ist.

8. Werkzeugträger nach Anspruch 1, **gekennzeichnet durch** eine mittels des Wegbegrenzers (86) eingestellte Vorspannung der Feder (92), die wenigstens 30 % größer ist als die sich aus dem Gewicht des Werkzeugs (10') ergebende Kraft.

9. Verwendung eines Werkzeugträgers nach einem oder mehreren der vorherigen Ansprüche für die Aufnahme von als Furchenöffnern ausgebildeten Werkzeugen (10') einer Sämaschine.

## Claims

1. A tool holder with a main frame (8) and at least one tool (10') which is vertically pivotally fitted on the main frame (8) by means of a strut (72), wherein a spring (8), which biases the tool (10') in one direction and bears at one end indirectly or directly on the main frame (8), and a stroke limiter (86) of adjustable length are provided between the strut (72) and the frame (8), the stroke limiter comprising a first stop (106) which can come into abutment with the strut (72), **characterized in that** the stroke limiter (86) comprises a second stop (102) which is movably mounted relative to the stroke limiter (86) and on which the spring (92) can be brought into abutment at the other end and which can come into abutment with the strut (72), and **in that** the stroke limiter (86) is movable relative to the strut (72) without additional loading by the spring (92) within a range limited by the first stop (106) and the second stop (102).

2. A tool holder according to claim 1, **characterized in that** the stop (102) on the stroke limiter (86) is axially movably mounted.

3. A tool holder according to claim 1, **characterized in that** the movement of the stop (102) is limited by a stop (106) which is provided at one end on the stroke limiter (86), wherein the stop (106) absorbs the weight of the tool (10'), while the spring (92) is seated on the stop (102) and bears from a predetermined stroke of the tool (10') on the side of the tool (10') opposite the stop (106).

4. A tool holder according to claim 1, **characterized in that** the stop (102) is connected to a sleeve (14) extending through a bore in the strut (72), is formed as a plate with a substantially greater diameter than the sleeve (104) and receives the spring (92).

5. A tool holder according to claim 1, **characterized in that** the stroke limiter (86) comprises a threaded rod (96) and a tie bar (88) receiving this, these being able to be screwed into one another.

6. A tool holder according to claim 1, **characterized in that** the tie bar (88) comprises a plate formed spring holder (94).

7. A tool holder according to claim 1, **characterized in that** the tool (10') can be brought into different positions relative to the main frame (8), especially by means of a pressure control device (34).

8. A tool holder according to claim 1, **characterized by** a pre-stress of the spring (92) adjusted by means of the stroke limiter (86) which is at least 30% greater than the force resulting from the weight of the tool (10').

9. Use of a tool holder according to one or more of the preceding claims for reception of tools (10') of a seeder formed as furrow openers.

## Revendications

1. Porte-outil comportant un châssis principal (8) et au moins un outil (10'), qui est monté au moyen d'une entretoise (72) de manière à pouvoir pivoter verticalement sur le châssis principal (8), et dans lequel il est prévu entre l'entretoise (72) et le châssis principal (8), un ressort (92), qui repousse l'outil (10') dans une direction et s'applique à une extrémité directement ou indirectement sur le châssis principal (8), et un limiteur de course (86) dont la longueur peut être modifiée et qui comporte une première butée (106), qui peut venir s'appliquer sur l'entretoise (72), **caractérisé en ce que** le limiteur de course (86) possède une seconde butée (102), qui est montée de manière à être déplaçable par rapport au limiteur de course (86) et contre laquelle le ressort (92) peut s'appliquer par son autre extrémité et qui peut venir s'appliquer sur l'entretoise (72) et que le limiteur de course (86) est déplaçable à l'intérieur d'une zone limitée par la première butée (106) et la seconde butée (102), par rapport à l'entretoise (72), sans contrainte supplémentaire appliquée par le ressort (92).

2. Porte-outil selon la revendication 1, **caractérisé en ce que** la butée (102) est monté de manière à être mobile axialement sur le limiteur de course (86).

3. Porte-outil selon la revendication 1, **caractérisé en ce que** le déplacement de la butée (102) est limitée par une butée (106) qui pour sa part est prévue sur le limiteur de course (106), la butée (106) supportant le poids de l'outil (10'), tandis que le ressort (92) prend appui sur la butée (102) et s'applique, à partir d'une course prédéterminée de l'outil (10'), sur le côté de l'outil (10') située à l'opposé de la butée (106).

4. Porte-outil selon la revendication 1, **caractérisé en ce que** la butée (102) est reliée à une douille (104) qui s'étend dans un perçage formé dans l'entretoise (22), est agencé en forme de coupelle possédant un diamètre nettement supérieur à celui de la douille (104) et reçoit le ressort (92).

5. Porte-outil selon la revendication 1, **caractérisé en ce que** le limiteur de course (86) comporte une tige filetée (86) et un tirant d'ancrage (88) qui reçoit cette tige, la tige filetée et le tirant d'ancrage étant vissables l'un dans l'autre.

6. Porte-outil selon la revendication 1, **caractérisé en ce que** le tirant d'ancrage (88) possède un support (94) de ressort, en forme de coupelle.

7. Porte-outil selon la revendication 1, **caractérisé en ce que** l'outil (10') peut être amené dans différentes positions par rapport au châssis principal (8), notamment à l'aide d'un dispositif de commande de serrage (34).

8. Porte-outil selon la revendication 1, **caractérisé par** une précontrainte du ressort (92), qui est réglée à l'aide du limiteur de course (86) et qui est supérieure d'au moins 30 % à la force qui résulte du poids de l'outil (10').

9. Utilisation du porte-outil selon une ou plusieurs des revendications précédentes, pour recevoir des outils (10') d'un semoir, agencés sous la forme d'un ouvreur de sillons.
